# EUROPEAN PATENT SPECIFICATION

(11) **EP 1 799 768 B1**
(45) Date of publication and mention of the grant of the patent: **18.05.2011**
(21) Application number: 05784074.6
(22) Date of filing: 16.09.2005
(51) Int. Cl.: C08L 75/00, C08L 67/04, C08G 63/08, A01L 5/00

(54) **ANIMAL SHOE OF BODIES OF POLYURETHANE AND POLYCAPROLACTONE**
AUS EINER MISCHUNG VON CAPROLACTON UND POLYURETHANTEILCHEN ERHALTENER SCHUH
CHAUSSURE OBTENUE D'UN MELANGE DE PARTICULES DE POLYCAPROLACTONE ET DE POLYURETHANE

(30) Priority: 16.09.2004 GB 0420639; 14.02.2005 GB 0503060
(43) Date of publication of application: 27.06.2007
(73) Proprietor: Poynton, Andrew P., Malmesbury Wiltshire SN16 9AT (GB)
(72) Inventor: Poynton, Andrew P., Malmesbury Wiltshire SN16 9AT (GB)
(74) Representative: Wise, Stephen James
(86) International application number: PCT/GB2005/003581
(87) International publication number: WO 2006/030229

(56) References cited:
- EP-A- 1 251 733
- WO-A-94/00163
- US-A- 3 236 310
- US-A- 4 265 314
- US-A- 4 346 762
- US-A- 5 151 315
- US-A- 5 199 498
- US-A- 5 593 628
- US-B1- 6 210 788

## Description

### Field of the Invention

The present invention relates to a shoe for a hoofed animal, such as a horseshoe.

### Background Art

Domesticated horses are normally shod with horseshoes, attached by nailing to the underside of a horse's hoof, to protect it from damage. Conventional horseshoes are made of metal such as cast iron, steel or an aluminium alloy and are generally arcuate in shape and sized to fit the hoof being shod. One or more upstanding tabs may be arranged at the front or on the sides of the shoe to assist in locating the shoe on the hoof and/or to provide additional protection for the toe of a horse's foot. Typical known designs of metal horseshoe are so-called egg, straight and heart-bar shoes.

Plastics and rubber horseshoes are also known and have been used for shoeing horses suffering from hoof problems. For example a kit form of horseshoe is known which uses a polyurethane base plate that has to be cut to the shape of a horse's hoof, attached by welding plastic tags at intervals to the outer rim of the base and cementing the plastic tags to the outer wall of the hoof. Plastics horseshoe are generally lighter than metal ones and have the advantage that they can be fixed to a horse's hoof by glueing instead of nailing. This is beneficial when a horse is suffering foot problems because nails are not necessary.

United States patent specification number 5,199,498 describes a horseshoe pad comprising of polymer composition containing at least about 50% by weight of high molecular caprolactone polymer. The composition has a melting point of between 120 F to about 200 F (about 48.9°C to about 93.3°C). The molecular weight of the caprolactone polymers is between 35,000 to about 60,000. This pad is arranged to cover areas of a horse's foot that are sensitive and vulnerable to disease and damage and the pad is positioned between a horseshoe and the hoof to expand the protection afforded by the horseshoe but does not obviate the need for the shoe.

Plastics horseshoes currently available have the disadvantage that they are time-consuming and cumbersome to apply, particularly those that have to be assembled from a kit of parts.

EP-A-1251733 describes a plastics shoe to protect diseased feet of hoofed animals. It is made from a thermoplastic material with a melting point of less than 100 C which is made so that it is readily softenable by immersion in hot water such as boiling water or near boiling water. It is hard at ambient temperatures and at normal hoof sole temperatures and possesses moderate abrasion resistance. It is made from polycaprolactone and particularly from that made under the Trade Mark CAPA® by Solvay Interox Limited, Baronet Road, Warrington, Cheshire WA4 6HB, United Kingdom and TONE® from Union Carbide Corporation of 39 Old Ridgebury Road, Danbury, Connecticut 06817-0001, United States of America. CAPA® is a biodegradable polyester of -caprolactone and butane-1, 4-diol. One example uses CAPA® 650 also known as (appa 6500) polycaprolactone, optionally blended with minor amounts, up to 25% by weight, of CAPA® 850 polycaprolactone and/or with up to 10% by weight of CAPA® 640 polycaprolactone. CAPA® 650 has a molecular weight of from about 48,000 Daltons to about 52,000 Daltons, CAPA® 680 of about 80,000 Daltons and CAPA® 640 about 37,000 Daltons.

The form of the shoe in EP-A-1251733 is of a body with a ground-contacting surface and a foot-contacting surface, which has a protruding peripheral flange portion or a plurality of tab portions adapted in use to abut against at least a part of the outer wall of the foot of a horse. The body has an arcuate portion shaped to underlie the hoof and the ends of the arcuate portion are joined one to another by a crosspiece carrying a frog piece intended to underlie the part of the horse's foot known as the frog. The ground-contacting surface of the shoe is substantially planar and it may have a chamfered portion on its underside at the front end to underlie the toe of the horse's hoof in use.

The horseshoe is fitted by first being placed into hot, non-reactive liquid, such as water, until it becomes soft and pliable, when it is then pressed onto the horse's foot to deform the flange on the foot-contacting surface of the horseshoe to fit the horse's foot. The shoe is then cooled until it is set and cemented to the hoof by application of a suitable bonding agent between the flange of the horseshoe and the hoof.

### Summary of the Invention

It has now been found that a new and inventive mixture of plastics improves the durability, wear resistance and non-slip qualities to such an extent that a plastics shoe can be made suitable for everyday use by a horse and for use by working horses such as cart horses or racing horses. The shoe described in EP-A-1251733 is not suitable for use by working horses or racing horses since it is not sufficiently durable or non-slip, and a skilled man would not consider using it except to protect diseased feet in equines.

The present invention also relates to an improved shape for a plastics horseshoe for everyday and sporting wear by equines.

According to one aspect of the present invention there is provided a plastics material comprising a mixture of polycaprolactone and polyurethane particles. Preferably the mixture comprises two parts polycaprolactone 650 to one part polycaprolactone 680, mixed with between 1% and 60% polyurethane particles.

Preferably this mixture is injection moulded to produce a material with essentially the original properties of the polycaprolactone, including deformability at low temperatures, but which will hold its form and not rebound (in the way in which rubber does) . This mixture provides a tough filler with high abrasion resistance and improved grip factor.

Preferably between 15% and 50% polyurethane particles are added, even more preferably between 25% and 35% and most preferably around 30%.

A mix of around 40% polycaprolactone particles produces a particularly hard wearing material suitable for heavier horseshoes.

According to one embodiment of the invention the polyurethane comprises a small amount of a polyurethane with a hardness of 35D and a larger amount of a polyurethane with a hardness 60D.

For example, up to 15% of a 35D hardness polyurethane, and preferably only 5% of a 35D hardness polyurethane is used, with the rest of the polyurethane portion being made up of a 60D hardness polyurethane.

The polyurethane particles may be polyester polyurethane or polycaprolactone polyurethane: both surprisingly achieve a strong bond with the polycaprolactone without melting the polyurethane even though polyurethane melts at 180°C whereas polycaprolactone melts at only about 60°C.

Most polyurethane elastomers would be suitable for use in this invention, and examples are those sold by Urethane Limited of Prescott Drive, Warndon Business Park, Warndon, Worster, WR4 9NE, England. For example Urethane PUG 165 DBE or 160 DBE, which are polyester polyurethane elastomers for injection moulding, or Urethane PUG 182 ACCES, PUG 170 DCCE or PUG 160 DCCE which are polycaprolactone polyurethane elastomers for injection moulding. The PUG 170 DCCE version has a heat stabiliser system incorporated.

Ideally the mixture retains the advantages of polycaprolactone i.e., the ability to mould at relatively low temperatures such as in hot water, but improves the abrasion resistance and grip factor on hard surfaces particularly such as concrete and asphalt or tarmac. A skilled man would not normally consider combining these two very different types of materials, for example because the polyurethane has a considerably higher melting temperature and one would not expect the materials to bond satisfactorily, nor even to stay as a mixture: one often would be expected to "fall out" of the mixture. However the inventor has found that, surprisingly, the two materials do bond, particularly when injection moulding is used. The polycaprolactone-based polyurethane has a common factor to help the bond with the polycaprolactone mixture, but the polyester based polyurethane also bonds at low temperatures e.g. 60°C.

Not only caprolactone based polyurethane but also ester based polyurethanes can be used.

According to one embodiment the plastics mixture is formed with polyurethane particles suspended in the caprolactone blend. The suspended particles are preferably of 1 to 2mm diameter.

According to a second aspect of the invention there is provided a product, such as for example shoe for a hoofed animal, formed by injection moulding the mixture of the first aspect, preferably comprising a first part comprising a ground contacting surface, and a second part comprising a foot-contacting surface. The ground-contacting surface may be provided with a tread pattern to increase ground grip.

A horseshoe made from the mixture of the first aspect is safer than a conventional horseshoe since the grip of the inventive mixture is better even than that achieved with steel. A shoe according to the invention can be produced with such high wear resistance and toughness that it can be used for sport and leisure wearing. The anti-concussive properties provide 3 to 4 times less shock than steel on hard surfaces such as concrete and asphalt. This, and the flexibility of the shoe, aids mobility and the shoe is lighter, and can be attached without nailing.

The plastics mixture of the first aspect can also be used for other applications in which such advantageous properties would be desirable. For example therapeutic shoes or boots for lame cows or other bovine animals could be made from the mixture of the first aspect. These will be less slippery and more durable than known such shoes but will still be easy to mould and manipulate. Customised protective pads, for example for furniture (e.g. office chairs) could also be made from such a mixture which will be easy to apply to the items to be protected but durable and abrasion resistant as well.

Alternatively the first ground-contacting part of the shoe can be moulded from polyurethane material and the second foot-contacting part from polycaprolactone.

The plastics mixture for a shoe of the second aspect can be varied depending upon the size and purpose of the shoe to be made. For example a foal shoe which is typically 2¾ inches (0.07m) does not require the same toughness as a 6 inch (0.1524m) shoe for a 17 hands high (hh) (1.72m high) event horse that does road work. Using more of the CAPA® 6800 makes the shoe tougher but somewhat harder to heat and mould to intricate shapes.

According to a third aspect of the present invention there is provided a shoe for a hoofed animal comprising a body moulded from a plastics material having a freezing point of at least about 30°C and a melting point or melting point range of less than about 95°C, the body having a ground-contacting surface and a foot-contacting surface, a protruding peripheral flange portion projecting from the foot-contacting surface in use, to abut against at least a part of the outer wall of the foot of the hoofed animal, and an arcuate portion, the ends of which are joined one to another by a crosspiece, which carries a frogpiece arranged to underlie the frog part (which grows out of the central cleft at the back) of a horse's foot in use, wherein the crosspiece and frogpiece comprise a generally triangular section with an indentation from an outer rear edge of the shoe towards the apex of the triangular section forming a broad W shape at the rear of the shoe. The indentation may be formed in the moulding process or cut out after moulding.

This shape of the plastics shoe is advantageous since it allows lateral flexing of the shoe in use. The W shape forms a concertina shaped flexing bar which mimics the natural anatomy of a horse's foot and acts as a shock absorber. It reinforces the natural function of a horse's hoof. As farriers well know, it is important not to lock up the natural function and flexibility of a horse's foot (except for therapeutic reasons). Metal shoes are known with this shape but they do not flex and are traditionally fastened (by nailing) only to the front of a horse's foot to avoid locking the heel. Some plastics shoes have a bar or strap for flexure in a vertical direction, i.e. to take up the undulations of uneven ground.

The exact shape and size of the W shape, including that of the three-contained angles, which each correspond to a flexion point, will depend upon the use to which the shoe is to be put, i.e. the size, weight and working pattern of the horse and the shape of the anatomy of its feet. The advantage of a shoe made from the plastics mixture of the first aspect is that the mouldable qualities allow customisation of the final shape of the shoe to exactly fit the horse's foot and suit the need of the shoe. The flexibility of the shoe is increased if the depth of one indentation or each indentation is increased. However if there is too much flexibility then the shoe will break more easily which is obviously a disadvantage.

The shoe of the invention is particularly versatile since it may be adapted for a horse with a broken bone by inserting more plastics mixture into the indentation /cut-out to prevent flexion when required.

On the ground-contacting surface of the shoe there is preferably formed a tread pattern. This may be a variety of shapes and sizes, to improve grip with the ground. The ground-contacting surface is also preferably bevelled along its edges to allow more grip and ease of turning. This is particularly advantageous for use in sporting activities, e.g. for a racehorse.

The peripheral flange portion may have its height varying along its length, e.g., as crenellations or as upstanding tab portions.

According to a fourth aspect of the invention there is provided a shoe for a hoofed animal comprising an arcuate body injection moulded from a plastics material, comprising a first body part, having a ground contacting surface, injection moulded from polyurethane, and a second body part having a foot-contacting surface, injection moulded from polycaprolactone.

Preferably the first body part has a flange and the second body part is moulded to at least partially surround or to overlap the flange to ensure the two parts hold together. Holes may be made in the flange to improve the adhesion of the two parts.

The shape of the shoe is preferably adapted specifically to either front feet or hind feet of a hoofed animal and the styles of shoe will be designed for specific breed types. The tread pattern and weight of the shoe will also vary for various disciplines. For example pony feet are more oval than a thoroughbred horse and hind feet more oval than front feet.

For a sports horse taking part in competitions it would be appropriate in particular circumstances to provide the facility of screw stud holes to improve surface grip.

A shoe for a horse involved in sporting competitions must be particularly resilient to wear, must be light and must stay on the horse. However a dressage horse predominately works on a soft surface and a shoe style with more width and surface bearing area, eg with a cross bar, is more suitable, although wear factor is less important.

The advantage of this particular design of shoe and the material from which it is made is that shoes can easily be adapted for various applications.

It is also possible to make coloured shoes.

The shoes may be fitted using the method described in EP-A-1251733. However with coloured shoes the material will not become clear and translucent at the point at which the shoe is ready to use so it is necessary for the shoe fitter to assess when the shoe is softened enough to fit by timing and/or by touch and feel or by use of a thermometer such as a digital infra-red thermometer which can read temperature at a distance, to ensure appropriate parts of the shoe are mouldable.

According to a fifth aspect of the present invention there is provided a shoe for a hoofed animal comprising a body moulded from a plastics material having a freezing point of at least about 30°C and a melting point or melting point range of less than about 95°C, the body having a ground-contacting surface and a foot-contacting surface, a protruding peripheral flange portion projecting from the foot-contacting surface, in use to abut against at least a part of the outer wall of the foot of the hoofed animal, and an arcuate portion, the ends of which are joined one to another by a crosspiece, which comprises an undulating portion.

Such an undulating portion is provided to follow the shape of a horses hoof at the rear of the shoe in the region of the hoof known as the frog. It provides protection for the frog and reinforces the natural function of a horse's hoof and acts as a shock absorber and is advantageous for a horse on uneven ground. It also facilitates lateral flexing of the hoof as a close coupled leaf spring, and distributes the weight borne by the heels over a much greater area, relieving the heels from possible overload.

When installed on a horse's hoof, the undulating crosspiece preferably bends in a curve rising toward the horse's hoof in regions close to the arcuate portion, and it may bend away from the hoof in a central portion, or the central portion may be constructed to be essentially flat and may be level with the arcuate portion. According to a preferred embodiment the crosspiece is generally thicker at the back, i.e. at the horse's heel and thinner toward the front. This has the advantage of helping to resist the ingress of dirt. On fitting of the shoe, the crosspiece is moulded to fit the hoof exactly and to follow the shape of the frog as closely as possible to resist dirt ingress. For example the rising regions may be fitted to bend into the lateral grooves of the frog and the central portion to fit over the ridges of the frog and into the central groove.

According to a further embodiment the shoe has a flange extending around the arcuate portion, so as to extend, in use, up the outside of the hoof. It is preferably tapered to reduce in height toward the rear of the heel so as effectively to disappear as it reaches the region of the crosspiece which coincides on both sides with the bar of the hoof, i.e. the horn on the inside of the hoof which is generally located at the point of the heel of the hoof. This flange allows the horseshoe to be moulded to the shape of the horse's hoof and improves shoe retention and resists the ingress of dirt between the shoe and the hoof and reduces the risk of interference with other limbs or feet. Tapering the flange at the rear of the shoe helps to allow dirt, e.g. mud etc, to escape.

All aspects of the invention can be applied to shoes for the front or the rear hooves. Front shoes for horses tend to be more circular than rear shoes which are somewhat more elongated. Of course the shapes of parts of such shoes depend on many factors and these descriptions are given as an example only.

### Brief Description of Drawings

For a better understanding of the present invention and to show how the same may be carried into effect, reference will now be made, by way of example, to the accompanying drawings, in which:
Figure 1 is a plan view of a ground-contacting surface of a horseshoe according to a first embodiment of the invention;
Figure 2 is a perspective view of the ground-contacting surface of the horseshoe of figure 1;
Figure 3 is a plan view of the foot-contacting surface of the horseshoe of figure 1;
Figure 4 is a perspective side view showing the ground-contacting surface of a front-foot horseshoe according to a second embodiment of the invention;
Figure 5 is a plan view of the ground-contacting surface of the horseshoe of figure 4;
Figure 6 is a plan view of the foot-contacting surface of the horseshoe of figure 4;
Figure 7 is a cut away view of part of the horseshoe of figure 4;
Figure 8 is a perspective side view showing the ground-contacting surface of a horseshoe according to a further embodiment of the invention;
Figure 9 is a rear view of the horseshoe of figure 8;
Figure 10 is a perspective side view of the foot-contacting surface of the horseshoe of figure 8;
Figure 11 is a cut away from the front of the horseshoe of figure 10;
Figures 12a to 12d are views of an alternative embodiment of a horseshoe according to the invention;
Figure 13 is a perspective view of a horseshoe according to the invention with an alternative tread pattern;
Figures 14 to 16 illustrate the moulding process for a two-part mould for a method according to another aspect of the invention.

### Detailed Description of Drawings

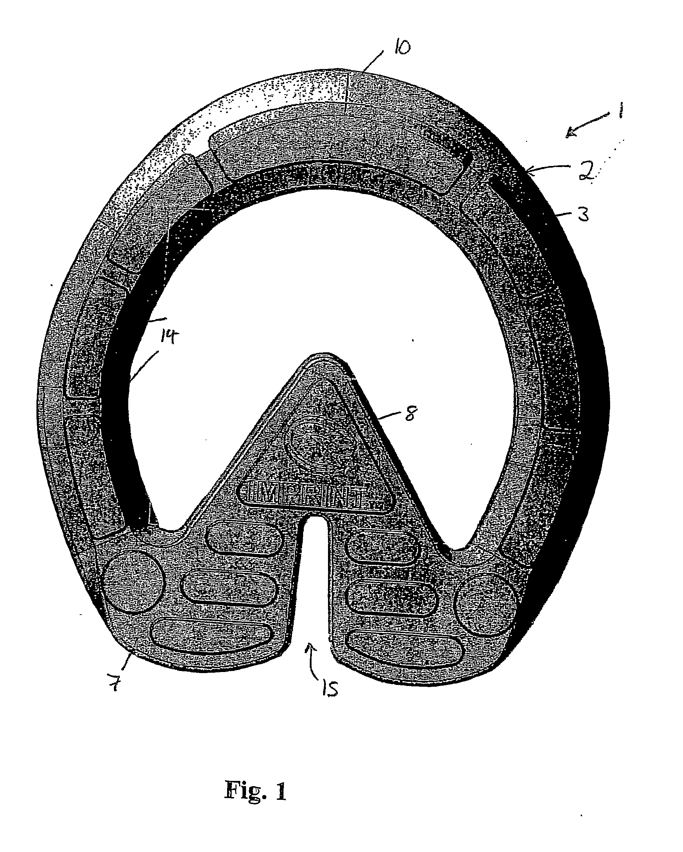

Figures 1 to 13 show horseshoes according to the invention which may be formed by casting or injection moulding. The length of the horseshoe is typically about 125mm and its breadth about 105mm, but the actual size will depend upon the application.

The horseshoe of the figures is generally substantially oval and approximately conforms to the periphery of a horse's foot. It comprises an arcuate bar portion shaped to underlie the hoof and a body 2 which has a ground-contacting surface 3 with an up-standing tread pattern 14 incorporated to aid surface grip. The tread pattern 14 may comprise a variety of shaped and sized portions such as oblong, round, rectangular, square and other shapes.

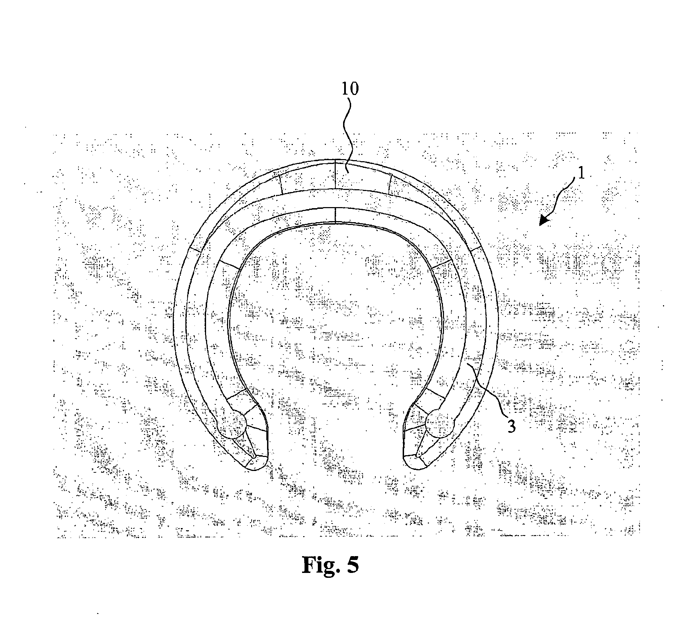

Some variations in tread pattern are shown in the figures. For example in figures 1, 2, 8 and 9 a segmented tread pattern is shown. In figures 5, 6 and 7 a narrow smooth tread 20 is shown on the arcuate portion with a chamfer 21 joining the ground contacting surface to the flange 5. This is good for softer surfaces but will withstand harder wear if subjected to contact with say metalled roads, than the segmented version shown in figures 1 to 3.

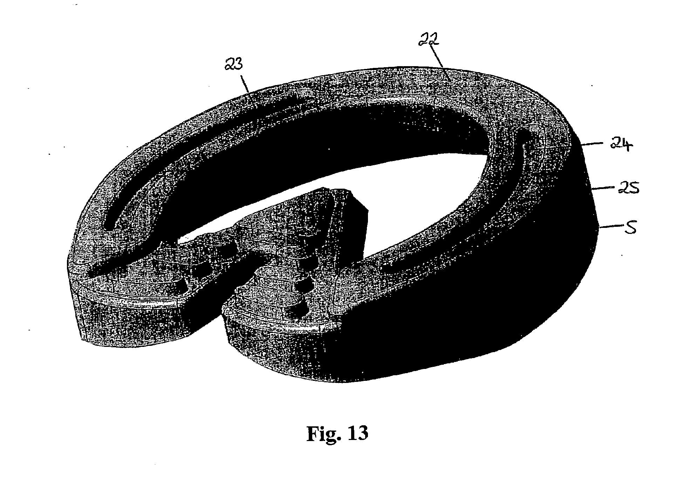

In figure 13 a wider surface 22 is provided with two arcuate indentations 23 and 24 at each side and with a generally right angled step 25 joining the foot-contacting surface 22 to the flange 5.

This increased ground contacting surface is suitable for work on hard and or abrasive surfaces such as for road work or for dressage horses.

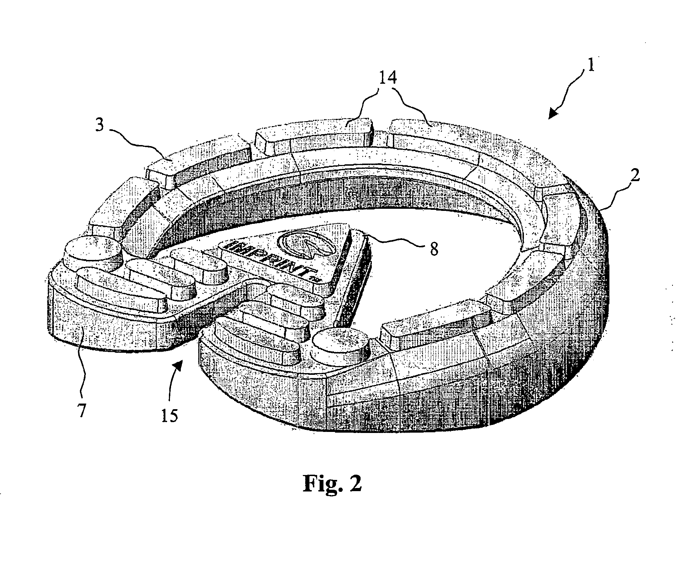

In the embodiment of figures 1 to 3 the two ends of the arcuate bar portion are joined one to another at the rear of the horseshoe by a crosspiece 7 carrying a frogpiece 8, which underlies the frog of the horse's foot in use. The frogpiece 8 is a generally triangular section extending from the crosspiece 7 into the space between the opposing arms of the arcuate bar portion. A cut-out 15 is provided in the rear of the bar portion so as to form the bar portion 7 and frogpiece 8 into a general W shape. This is clearly shown in figures 1 and 2. This improves lateral flexibility of the horseshoe and allows it to follow the natural movement of a horse's foot. A chamfered portion 10 is formed at the toe of a horse's hoof: this is bevelled to curve around and mimic the natural wear of the toe of the hoof.

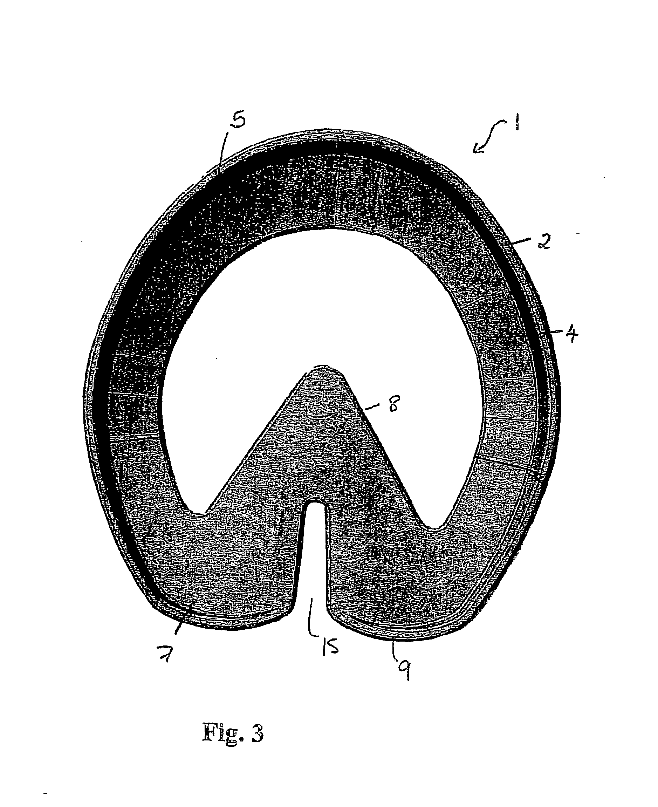

In figure 3 the foot-contacting surface 4 of the horseshoe of figures 1 and 2 as shown. Like reference numerals denote like parts. The frog-contacting surface of a horseshoe is intended to give a broad smooth curving bearing surface to increase the available surface area of the back part of the hoof, aiding comfort and alleviating overloaded heels. On this side can be seen an upstanding peripheral flange 5 which is adapted in use to abut against at least a part of the outer wall of the horse's hoof. This flange portion 5 protects the lower part of the hoof and provides a means of attaching the horseshoe 1 to the hoof other than by nailing, since this flange portion can be moulded and keyed to the hoof. This horseshoe will stay on the horse's foot because of the moulding step but for practical purposes it is preferably also attached by adhesive.

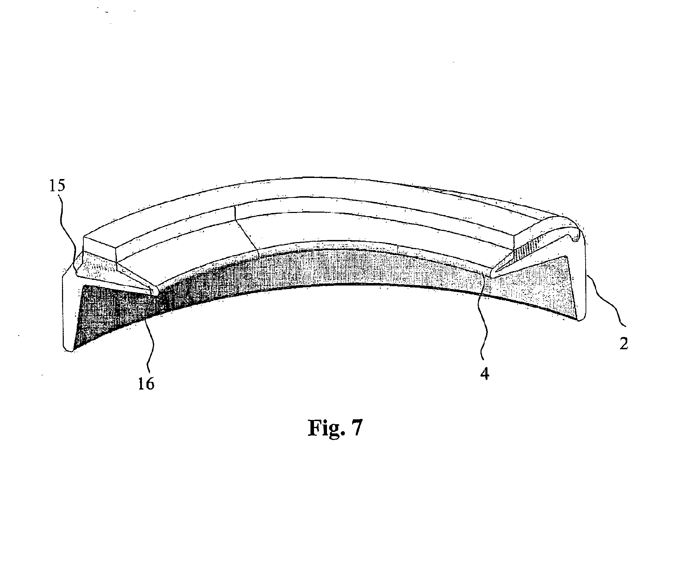

At the rear of the horseshoe 1 is an upstanding rear flange portion 9 formed on the crosspiece 7 which is intended to mate and blend against the heel of the hoof: it can be moulded to taper up the sides of the heel. This rear flange is lower than the flange 5, which tapers in section from its root where it joins the surface 3, to its upper rim. The actual dimensions depend on the size of the horse's feet. The flange 5 may extend all the way or alternatively only part of the way, for example a half to two thirds of the way, from the toe to the heel along each side of the horseshoe. The foot-contacting surface 4 is preferably formed at about 10-15 degree angle to the horizontal, or with a shallow V cross-section with each arm of the V stopping at an angle of about 10-15 degrees to the horizontal. This allows the shoe to be seated away from the horse's foot to avoid constricting blood circulation in the sole but the shoe will nonetheless spread and flatten like a diaphragm to introduce lateral flexure when maximum contact with the foot is required and this improves the shock absorption qualities of the shoe. This angled profile can be seen in figure 7.

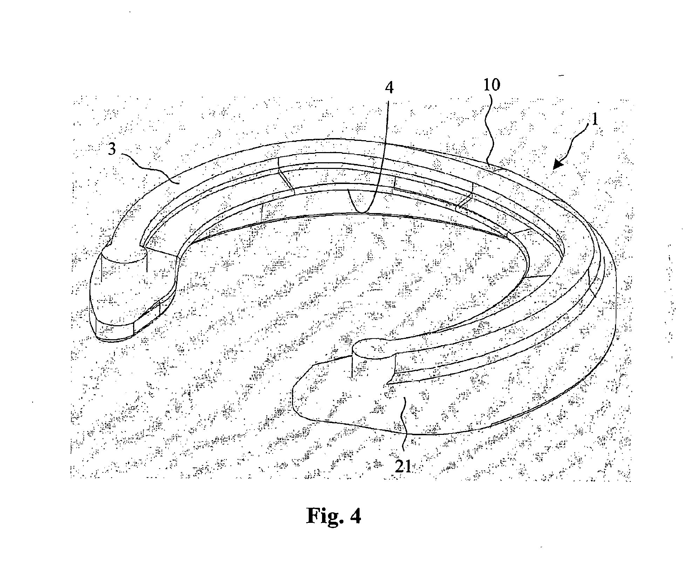

Figures 4 to 7 show a second embodiment of the invention which is particularly useful for sporting events, e.g., for race horses. This shoe 1 again has a body 2 with a ground-contacting surface 3 and a foot-contacting surface 4. In this case the horseshoe comprises an arcuate bar portion that does not have a crosspiece nor a frogpiece. This form of horseshoe has a relatively smooth ground-contacting surface 3, suitable for racehorses. There is a chamfered edge 10 corresponding in use to the toe of a horse which curves around the sensitive toe area to provide better protection for the toe.

This horseshoe may be moulded from a mixture of the two plastics materials polycaprolactone and polyurethane. However as shown it is moulded in two parts with each part moulded from respective ones of the two different types of plastics material. A first part comprising the ground-contacting surface 3 is moulded from a polyurethane material, for example a polyurethane material with a hardness 35D, or with a hardness 60D, or a mixture of the two. The second part comprising the foot-contacting surface 4 is typically formed of injection moulded polycaprolactone. These materials are injection moulded and the first part having the ground-contacting surface 4 is effectively moulded within the second part having the foot-contacting surface 3, so as to ensure that the two parts stay together. This is shown in figure 7 in which the cut-away view clearly shows that the first part with the ground-contacting surface 3 is moulded so as to have laterally extending flanges 15 and 16. The second foot-contacting, part is moulded so as effectively to fold around the flanges 15 and 16 to ensure that the two parts of the shoe do not separate in use. The first part may be formed with holes in the polyurethane into which the polycaprolactone material of the second part can flow to improve the cohesion of the two parts.

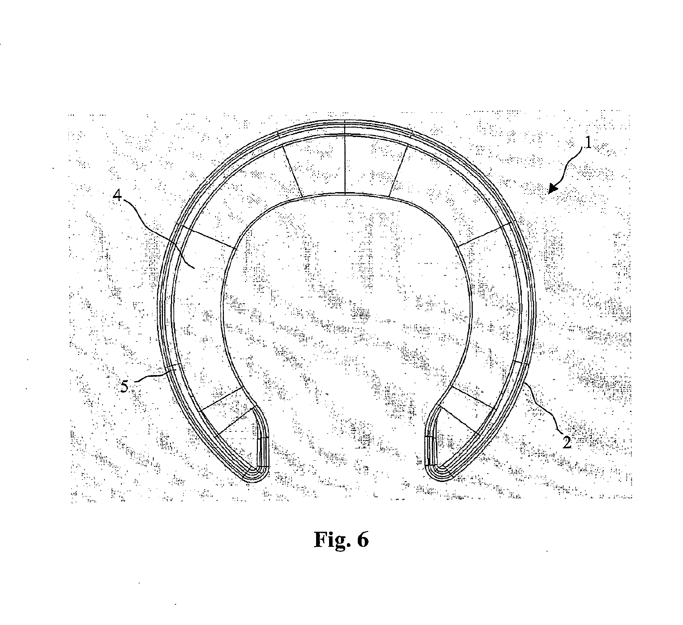

Figure 6 shows this "sport" shoe with the foot-contacting surface 4 and the flange 5. As in the first embodiment of figures 1 to 3, the foot-contacting surface 4 may be formed with a slope of 10-15 degrees, optionally in a V shape, to allow the shoe to seat away from the horse's foot.

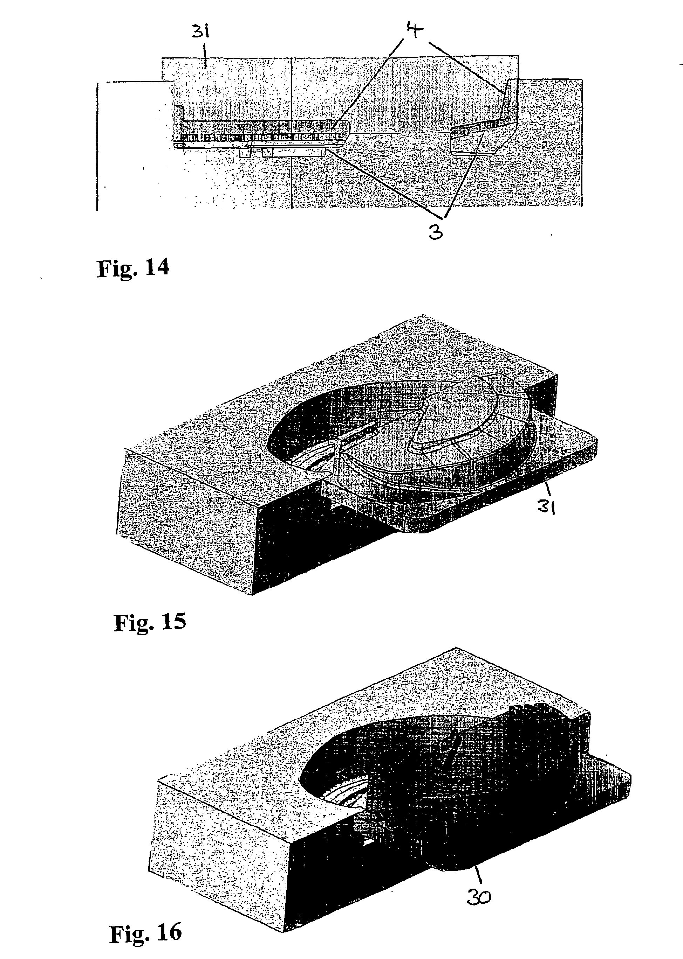

The two-part moulding may be formed using a mould such as shown in figures 14 to 16 which use two core plates.

A dovetailed first core plate 30 is located first to mould the polyurethane ground contacting portion 3. Then a second core plate 31 is located and the first portion 3 is overmoulded with the polycaprolactone blend to form the foot contacting surface 4.

The two parts 3 and 4 weld together and interlock by means of the dovetailing crenulations to create a strong union. The resulting shoe is very tough and durable where it contacts the ground. However the upper, foot contacting surface is easily and safely remoulded when heated in hot water, for fitting to a horse as described in relation to the first aspect.

The two-part moulding may be used with different shaped shoes including those with cross bars, heart bars including the W-shaped bar of the figures 1 or 3 and the undulating bar of the embodiment shown in the following figures.

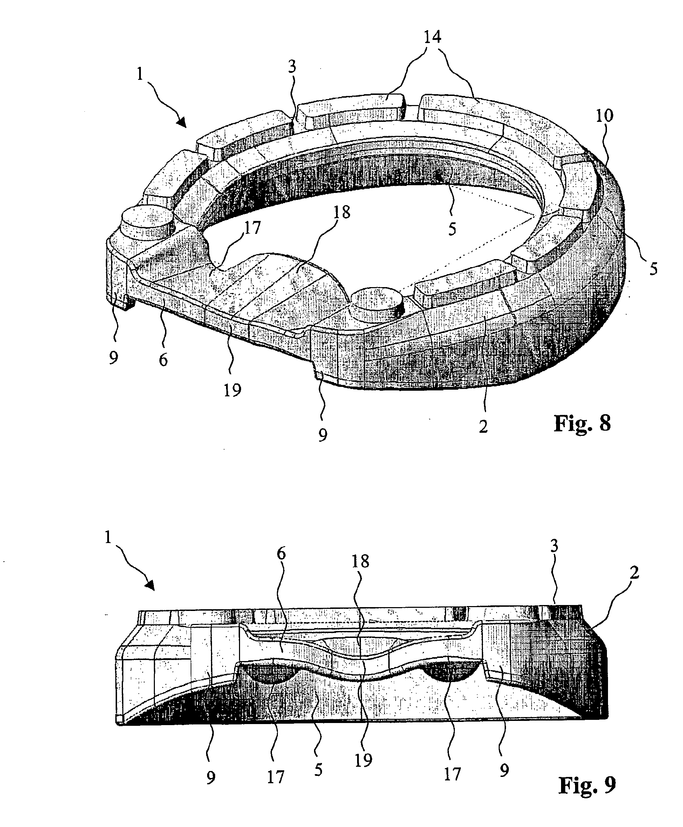

Figures 8 to 12d show two further embodiments of the invention which are particularly useful for resisting the ingress of dirt between the shoe and the hoof, and for horses on uneven ground. Importantly this design allows the easy release of accumulating mud from within the whole solar area of the hoof whilst the horse is working. The heels seemingly still "open" have the wedge shaped bar, which creates a smooth transitional passage for release of mud build up from within the solar area of the hoof, as opposed to a bar with a thick front edge which would trap and create a block and build up for mud and debris making the hoof heavy and lacking in traction.

This shoe 1 has a body 2 with a ground-contacting surface 3 and a foot-contacting surface 4 with a tread pattern 14. The shoe 1 has an undulating crosspiece 6 which rises toward the horse's hoof in portions 17 close to the arcuate portion, and bends away from the hoof in a front-central portion 18. The sides and the rear-central portion 19 of the undulating, concertina shaped, crosspiece 6 are generally higher and thicker than front-central portion 18, which helps resist the ingress of dirt and allows dirt to escape. The thinner front of the crosspiece 6 aids flexibility whilst the thicker rear makes it stronger. The front might typically have a thickness of about 4mm and the back about 8mm, before deformation caused by the weight of the horse and its load. The crosspiece 6 provides additional surface area to distribute loads over a larger area and thus better support the hoof.

The shoe is typically fitted to the horse using the moulding method described in EP-A-1251733 in which the plastics material is softened and so the shoe and the crosspiece can be moulded onto the hoof to fit it exactly and to follow the contours of the hoof, around the central cleft and across the frog as closely as possible to further resist dirt ingress. The crosspiece 6 will mirror the shape of the frog and act as a damper. In this way the shoe can be said to be close-coupled to the hoof and does not hinder the natural movement of a horse's foot but provides support. The crosspiece 6 is able to flex laterally over most of its width in a similar way to a leaf spring so as to allow for lateral expansion and contraction with the rear of the hoof.

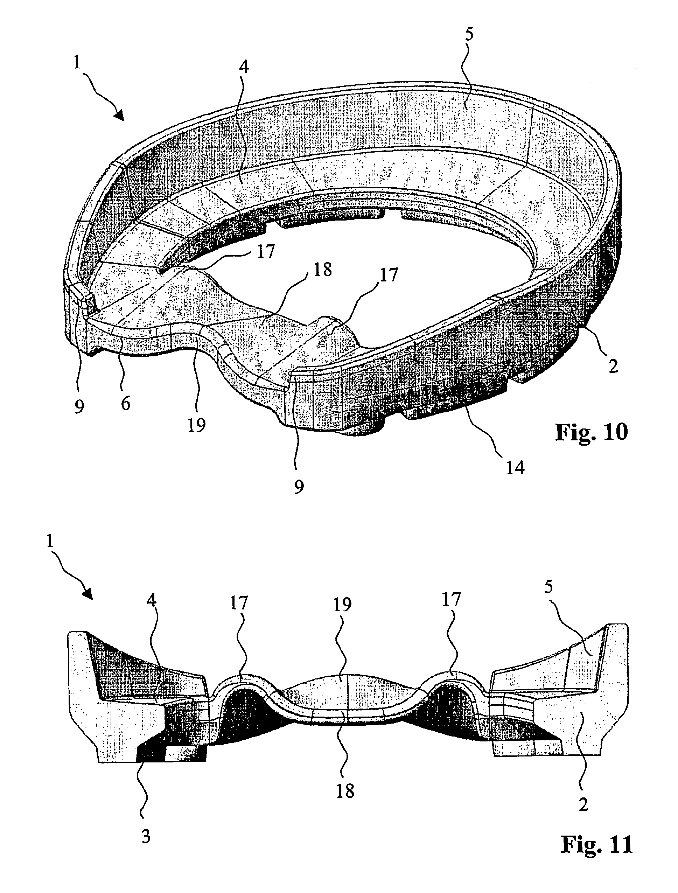

Figure 10 shows a flange extending around the arcuate portion, comprising an upstanding rear flange portion 9 and a higher flange portion 5. The flange portions 5,9 extend from the foot contacting surface 4 and when fitted extend around and up the outside of the hoof. The higher flange portion 5 is tapered to reduce in height toward the rear flange portion 9. This flange has all the advantages of the flange described in figure 3, with the additional benefit that the tapering at the rear flange portion helps to allow dirt to escape and further increase dirt ingress resistance. When the shoe is fitted by the moulding method described the flange is preferably moulded so that it tapers up the side of the hoof.

This embodiment of the horseshoe is particularly good for thoroughbred animals since it will serve to protect delicate heels and reinforce the natural strength and function of a horse's foot. Different sizes can of course be produced by different sized moulds. The strength added by the crosspiece means that a lighter shoe can be made, ie a lighter mixture used to make the shoe. This has obvious advantages for race horses.

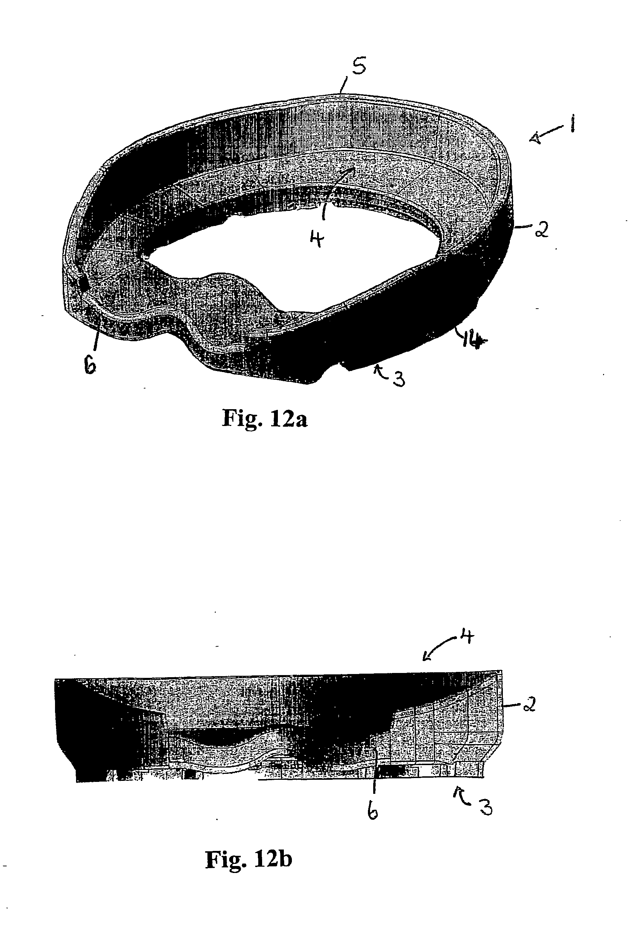

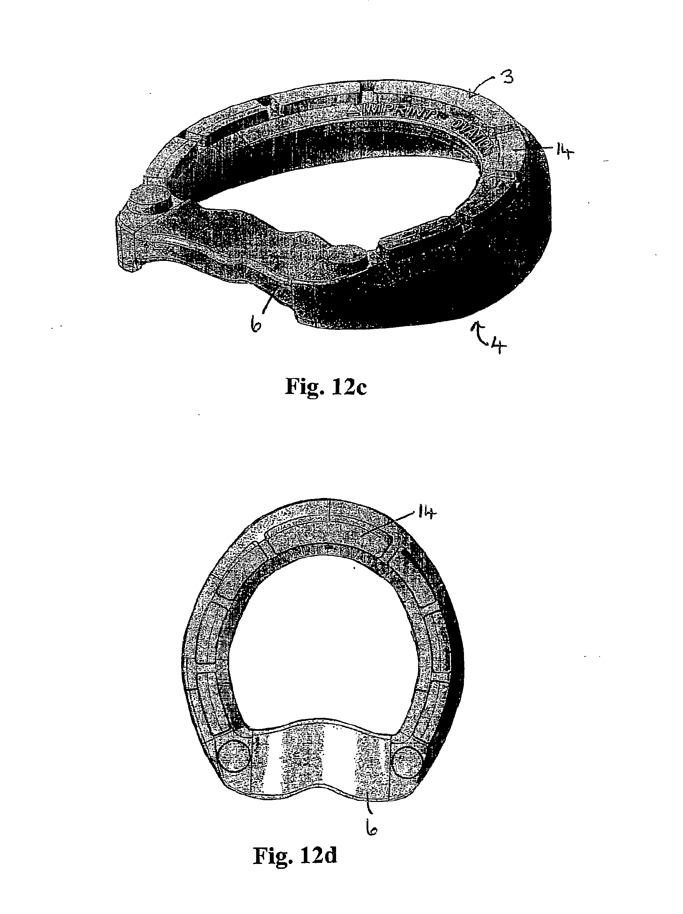

Figures 12a to 12d show an alternative embodiment of a shoe 1 with a crosspiece 6. in this embodiment the undulating cross piece 6 has corrugations which are arranged parallel to the front-back line of the shoe. This shoe may be moulded in a two-part form and the rear may have a thickness up to 10mm and the front around 6mm, although the exact section and the shape will vary with the size of the shoe and the degree of elasticity required.

The ground facing part of the crosspiece 6 may be as close as 2mm from the ground in an unloaded condition. When loaded with the horse's weight it compresses and stretches and contacts the ground, giving support to that part of the hoof whilst still allowing natural expansion of the heels of the horses hoof.

Thus it can be seen that the undulating corrugations in this embodiment are such that the ground contacting surface may be closer to the ground but may be generally thicker, than in the embodiment of figures 8 to 11.

The shoe of any of the described embodiments may be made by any of the methods described, or from any of the materials or combinations of materials. Apart from polycaprolactone and polyurethane, both natural and artificial rubbers, e.g. latex, may be used in certain embodiments.

## Claims

1. A shoe (1) for a hoofed animal, the shoe comprising an arcuate body (2) injection-moulded from plastics materials, **characterised in that** the body (2) comprises a first body part injection-moulded from polyurethane and having a ground-contacting surface (3) for contacting the ground when the shoe is fitted to a foot of the hoofed animal and a second body part injection-moulded from polycaprolactone and having a foot-contacting surface (4) for contacting the foot of the hoofed animal when the shoe is fitted to that foot.

2. A shoe as claimed in claim 1, wherein the first body part is over-moulded with polycaprolactone blend.

3. A shoe as claimed in claim 1 or claim 2, wherein the first body part and second body part weld together and are interlocked by means of dovetailing crenellations.

4. A shoe as claimed in claim 1, wherein the first body part has a flange (15, 16) and the second body part is moulded to at least partially surround or overlap the flange (15, 16) to hold the two body parts together.

5. A shoe as claimed in claim 1, wherein the first body part has two laterally extending flanges (15, 16) and the second body part is moulded to fold around the flanges to ensure the two parts do not separate in use.

6. A shoe as claimed in claim in claim 4 or claim 5, wherein the first body part has holes in the flange to improve the adhesion of the two parts.

7. A shoe as claimed in any one of the preceding claims, comprising screw stud holes to improve surface grip.

## Patentansprüche

1. Hufeisen (1), das einen aus Kunststoffmaterialien spritzgegossenen bogenförmigen Körper (2) umfasst, **dadurch gekennzeichnet, dass** der Körper (2) einen ersten aus Polyurethan spritzgegossenen Körperteil, der eine Bodenkontaktfläche (3) hat, die den Boden kontaktiert, wenn das Hufeisen am Fuß eines Huftiers angebracht ist, und einen zweiten aus Polycaprolacton spritzgegossenen Körperteil umfasst, der eine Fußkontaktfläche (4) hat, die den Fuß des Huftiers kontaktiert, wenn das Hufeisen an dem Fuß angebracht ist.

2. Hufeisen nach Anspruch 1, wobei der erste Körperteil mit Polycaprolacton-Blend überspritzt ist.

3. Hufeisen nach Anspruch 1 oder 2, wobei der erste Körperteil und der zweite Körperteil miteinander verschweißt werden und mittels zinnenartiger Schwalbenschwanzverbindungen ineinander verriegelt sind.

4. Hufeisen nach Anspruch 1, wobei der erste Körperteil (15, 16) einen Flansch hat und der zweite Körperteil so geformt ist, dass er den Flansch (15, 16) mindestens teilweise umgibt oder überlappt, um die beiden Körperteile zusammenzuhalten.

5. Hufeisen nach Anspruch 1, wobei der erste Körperteil zwei sich seitlich erstreckende Flansche (15, 16) hat und der zweite Körperteil so geformt ist, dass er sich um die Flansche herumfaltet, um zu gewährleisten, dass sich die beiden Teile im Gebrauch nicht trennen.

6. Hufeisen nach Anspruch 4 oder 5, wobei der erste Körperteil Löcher im Flansch hat, um die Haftung der beiden Teile zu verbessern.

7. Hufeisen nach einem der vorhergehenden Ansprüche, mit Schraubenbolzenlöchern zur Verbesserung der Oberflächengriffigkeit.

## Revendications

1. Fer (1) pour un animal à sabot, le fer comprenant un corps cintré (2) moulé par injection à partir de matières plastiques, **caractérisé en ce que** le corps (2) comprend une première partie de corps moulée par injection à partir de polyuréthane et ayant une surface en contact avec le sol (3) destinée à venir en contact avec le sol lorsque le fer est fixé sur un sabot d'un animal à sabot et une deuxième partie de corps moulée par injection en polycaprolactone, et ayant une surface en contact avec le sabot (4) destinée à venir en contact avec le sabot de l'animal à sabot lorsque le fer est fixé à ce sabot.

2. Fer selon la revendication 1, dans lequel la première partie de corps est surmoulée avec un mélange de polycaprolactone.

3. Fer selon la revendication 1 ou 2, dans lequel la première partie de corps et la deuxième partie de corps sont soudées l'une à l'autre et sont emboitées au moyen de créneaux en forme de queue d'aronde.

4. Fer selon la revendication 1, dans lequel la première partie de corps a une bride (15, 16) et la deuxième partie de corps est moulée pour au moins entourer en partie ou chevaucher la bride (15, 16) pour retenir les deux parties ensemble.

5. Fer selon la revendication 1, dans lequel la première partie de corps a deux brides (15, 16) s'étendant latéralement et la deuxième partie de corps est moulée de manière à se replier autour des brides pour s'assurer que les deux parties ne se séparent pas pendant l'utilisation.

6. Fer selon la revendication 4 ou la revendication 5, dans lequel la première partie de corps a des trous dans la bride pour améliorer l'adhésion des deux parties.

7. Fer selon l'une quelconque des revendications précédentes, comprenant des trous de tenons pour vis pour améliorer l'adhérence de surface.
